# EUROPÄISCHE PATENTSCHRIFT

(11) **EP 2 483 013 B1**
(45) Veröffentlichungstag und Bekanntmachung des Hinweises auf die Patenterteilung: **06.11.2013**
(21) Anmeldenummer: 10763318.2
(22) Anmeldetag: 27.09.2010
(51) Int. Cl.: B22D 2/00, B22D 11/18, B22D 11/20, G01K 11/14, G01K 11/32, G01K 1/14

(54) **KOKILLE ZUR VERARBEITUNG VON FLÜSSIGEM METALLISCHEM MATERIAL**
MOULD FOR PROCESSING MOLTEN METAL MATERIAL
LINGOTIÈRE DE TRAITEMENT DE MATIÈRE MÉTALLIQUE LIQUIDE

(30) Priorität: 30.09.2009 DE 102009043542; 18.02.2010 DE 102010008480
(43) Veröffentlichungstag der Anmeldung: 08.08.2012
(73) Patentinhaber: SMS Siemag AG, 40237 Düsseldorf (DE)
(72) Erfinder: FEHLEMANN, Gereon, 40489 Düsseldorf (DE); LAMBERTI, Thomas, 40591 Düsseldorf (DE); BARTZ, Boris, 40472 Düsseldorf (DE); LIEFTUCHT, Dirk, 48739 Legden (DE)
(74) Vertreter: Klüppel, Walter
(86) Internationale Anmeldenummer: PCT/EP2010/005883
(87) Internationale Veröffentlichungsnummer: WO 2011/038875

(56) Entgegenhaltungen:
- WO-A1-2009/156115
- WO-A1-2010/003632
- WO-A1-2010/012468
- JP-A- 9 047 855
- US-A- 4 823 166

## Beschreibung

Die Erfindung betrifft eine Kokille zur Verarbeitung von flüssigem metallischem Material, die eine Wandung aufweist, in der mindestens ein Sensorelement zur Erfassung der Temperatur und/oder Dehnung zumindest eines Teils der Kokille angeordnet ist, wobei das Sensorelement mindestens einen Lichtwellenleiter umfasst, der in einer Nut in der Wandung der Kokille angeordnet ist, wobei der Lichtwellenleiter im Nutgrund der Nut anliegt und wobei der vom Lichtwellenleiter nicht ausgefüllte Raum der Nut zumindest weitgehend, vorzugsweise vollständig, mit einem Füllstück verschlossen ist.

Eine Kokille dieser Art ist beispielsweise in der JP 09047855 A offenbart.

In der DE 35 41 445 A1 erfolgt das Messen örtlicher Temperaturen mittels Thermo-Elementen in einer Stranggießkokille für flüssige Metalle. Die Temperaturmesselemente werden als Sonden ausgeführt, die die Lage des Gießspiegels der Schmelze und andere Größen in der Kokille regeln. Die WO 2004/082869 A1 offenbart eine ähnliche Lösung. Auch hier werden ThermoElemente zur Ermittlung der Kokillen-Temperatur eingesetzt.

Ferner zeigt die DE 34 36 331 A1 eine Einrichtung zur Temperaturmessung in einer Stranggießkokille mittels Thermo-Elementen, deren Thermodrähte in Bohrungen der Metallwände der Kokille angeordnet sind.

Bekannt geworden ist auch der Einsatz von Lichtwellenleitern zur Temperaturmessung. Grundsätzliches und Details hierzu sind in der eingangs genannten JP 09047855 A, in der WO 2009/156115 A1, in der WO 2010/003632 A1 und in der US 4,823,166 angegeben. Lichtwellenleiter zur Temperaturmessung werden dabei in der Form eingesetzt, dass beispielsweise Glasfasern in einem Metallrohr geführt sind und dieses dann in dem Medium bzw. Bauteil befestigt ist, in bzw. an dem die Temperatur zu messen ist.

Um genaue Messung durchführen zu können, ist es erforderlich, dass der Lichtwellenleiter oder das Metallrohr, das den Lichtwellenleiter umgibt, eng an dem Bauteil bzw. Medium anliegt, und zwar möglichst ohne (isolierenden) Luftzwischenraum. Dies gilt insbesondere dann, wenn per Lichtwellenleiter in einer Kokille die Temperatur bestimmt werden soll. Hierzu können in die Kokille, insbesondere in die Kokillenrückseite, Nuten bzw. Schlitze eingefräst werden, in denen der Lichtwellenleiter verlegt wird.

Problematisch ist dabei, dass nur schwierig sichergestellt werden kann, dass der Lichtwellenleiter bzw. das diesen umgebende Metallrohr dicht im Schlitzbzw. Nutgrund anliegt, so dass ein sicherer Wärmeübergang zwischen Nutbzw. Schlitzgrund und Lichtwellenleiter bzw. Metallrohr gewährleistet ist.

Der vorliegenden Erfindung liegt die Aufgabe zugrunde, eine Kokille der eingangs genannten Art so fortzubilden, dass das genannte Problem gelöst wird. Demgemäß soll eine Ausgestaltung der Kokille geschaffen werden, mit der eine Installation eines effizienten Überwachungselements für die Kokille in kostengünstiger Weise ermöglicht wird. Dabei soll eine kontinuierliche und präzise Überwachung der Temperaturen und der Dehnung der Kokille möglich sein, die sich kostengünstig realisieren lässt.

Die Lösung dieser Aufgabe durch die Erfindung ist dadurch gekennzeichnet, dass - damit auch eine Dehnung der Wandung der Kokille gemessen werden kann - der Lichtwellenleiter bzw. ein diesen umgebendes Rohr mit dem Nutgrund fest verbunden ist, wobei die Nut an der von der Heißseite der Wandung abgewandten Seite eingearbeitet ist und wobei der Lichtwellenleiter in der Wandung der Kokille vertikal verläuft.

Der Lichtwellenleiter kann dabei in einem diesen umgebenden Rohr angeordnet sein.

An die von der Heißseite der Wandung abgewandte, mit der Nut versehene Seite grenzt bevorzugt ein Kühlkanal an.

Das Füllstück besteht bevorzugt aus Metall oder Kunststoff. Es kann passgenau zur Form der Nut ausgebildet sein. dabei sieht eine spezielle Ausgestaltung der Erfindung vor, dass das Füllstück durch ein Vergießen oder Spritzen des Materials des Füllstücks in die Nut erzeugt ist. Hiernach wird also das Material, aus dem das Füllstück besteht, gießfähig (im Falle von Metall) oder spritzfähig (im Falle von Kunststoff) gemacht und dann in die Nut, in die der Lichtwellenleiter ggf. samt Rohr eingelegt wurde, eingegossen bzw. eingespritzt.

Die von der Heißseite der Wandung abgewandte, mit der Nut versehene Seite samt dem in der Nut angeordneten Füllstück kann mit einer Beschichtung versehen sein, wobei die Beschichtung vorzugsweise aus metallischem oder organischem Material besteht. Die Beschichtung bedeckt mit Vorteil eben und durchgängig die Wandung und das Füllstück. Die metallische Beschichtung kann galvanisch auf die Wandung aufgebracht sein.

An zumindest einer Stirnseite der Wandung der Kokille kann schließlich eine Nut oder ein Schlitz eingearbeitet sein, deren bzw. dessen Breite mindestens dem Durchmesser des Lichtwellenleiters entspricht. Damit lässt sich die Montage des Lichtwellenleiters in der Kokillenwandung wesentlich vereinfachen.

Der Lichtwellenleiter bzw. das diesen umgebende Metallrohr wird also in eine Nut bzw. in einen Schlitz in der Kokillenwandung gelegt und mit einem Füllstück passgenau in der Nut bzw. im Schlitz fixiert. Das vorzugsweise aus Metall bestehende Füllstück kann auch aus einem anderen Werkstoff bestehen.

Um sicherzustellen, dass vom Wasserkasten aus kein Wasser in die Nut zu der Messebene hin eindringt, kann nach dem Einbringen der Füllstücke die komplette Wasserseite bzw. Kühlseite metallisch oder auch organisch wie erwähnt beschichtet werden.

Falls beabsichtigt ist, den Lichtwellenleiter mäanderförmig in die Rückseite der Kokillenplatte einzubringen, erhält die Kokillenplatte an der oben und unteren Stirnseite den erwähnten Schlitz, dessen Breite mindestens dem Durchmesser des Lichtwellenleiters bzw. Metallrohres entspricht und dessen Länge mindestens dem zweifachen Biegeradius des Bogens des Lichtwellenleiter bzw. des Metallrohres entspricht. In diesen Schlitz wird der Lichtwellenleiter bzw. das Metallrohr - aus der Nut bzw. dem Schlitz kommend - um bis zu 180° gewendet, um dann wieder in die nächste Nut einzutauchen. Eine Abdichtung dieses Schlitzes erfolgt entweder durch eine abgedichtete Verschlussplatte oder durch eine abdichtende Beschichtung.

Diese Art der Einbringung des Lichtwellenleiters in die Rückseite der Kokillenplatte bzw. in ein Kokillenrohr ermöglicht es, dass der Lichtwellenleiter bzw. das Metallrohr über die Geometrie der Nut der Kontur der Heißseite folgt, so dass diese Bauform auch für Trichterkokillen von Dünnbrammenanlagen und Brammen- bzw. Brammen-Bogenanlagen sowie ein- und zweiteilige Block- und Beam Blank Kokillen eingesetzt werden kann.

In der Zeichnung ist ein Ausführungsbeispiel der Erfindung dargestellt. Es zeigen:
- Fig. 1: eine perspektivische Ansicht einer Wandung einer Brammenkokille,
- Fig. 2: die Vorderansicht eines Ausschnitts der Wandung gemäß Fig. 1,
- Fig. 3: den Schnitt A-B durch die Wandung gemäß Fig. 2 und
- Fig. 4: die Vergrößerung "X" gemäß Fig. 3.

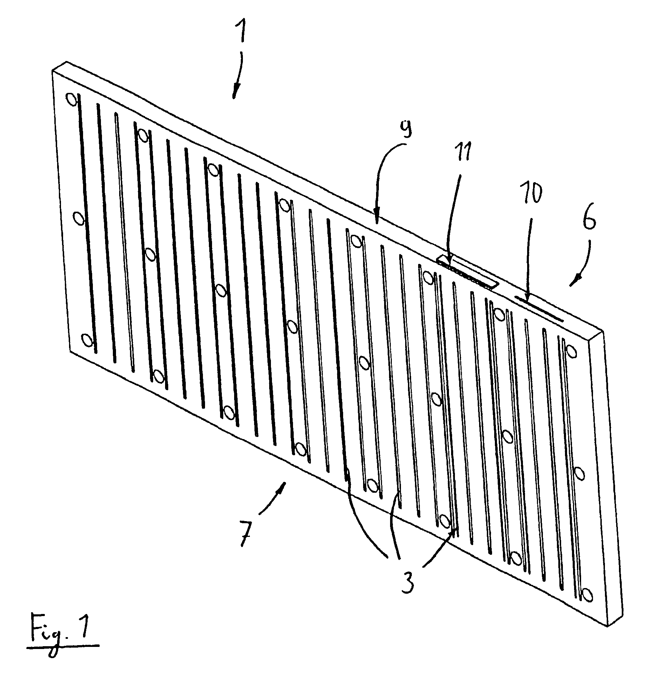

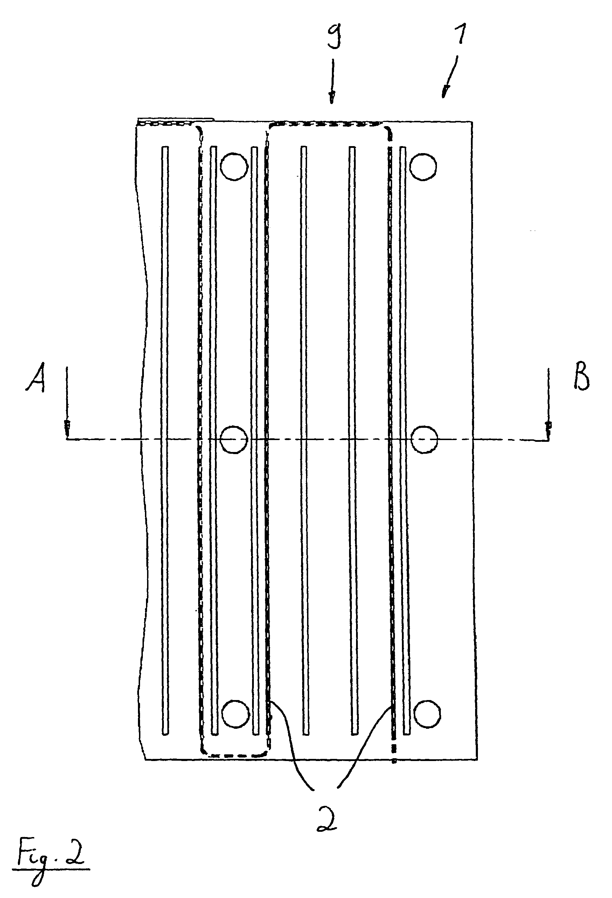

In Fig. 1 und Fig. 2 ist eine Wandung 1 einer Stranggießkokille zu sehen. Die Heißseite 6 der Wandung 1 liegt der abgewandten Seite 7 gegenüber, die in Fig. 1 zu sehen ist; in Fig. 2 ist die abgewandte Seite 7 zu erkennen. In der Wandung 1 ist ein Lichtwellenleiter 2 mäanderförmig verlegt. Über den Lichtwellenleiter 2 ist es möglich, die Temperaturverteilung entlang des Leiters zu ermitteln, wie unten näher erläutert ist.

Der Lichtwellenleiter 2 besteht aus einer Grundfaser, die eine Dicke im Bereich zwischen ca. 100 bis 150 µm aufweist. Sofern der Lichtwellenleiter in einem Hüllrohr angeordnet ist, weist dieses zumeist einen Durchmesser von ca. 800 bis 2.000 µm auf. Der Lichtwellenleiter bzw. seine Grundfaser, die mit oder ohne Hüllrohr benutzt werden kann, kann dabei Temperaturen bis zu 600 °C Dauerbelastung problemlos ertragen.

Durch die mäanderförmige Verlegung des Lichtwellenleiters 2 kann die Fläche der Wandung 1 gut bezüglich der Temperaturverteilung überwacht werden.

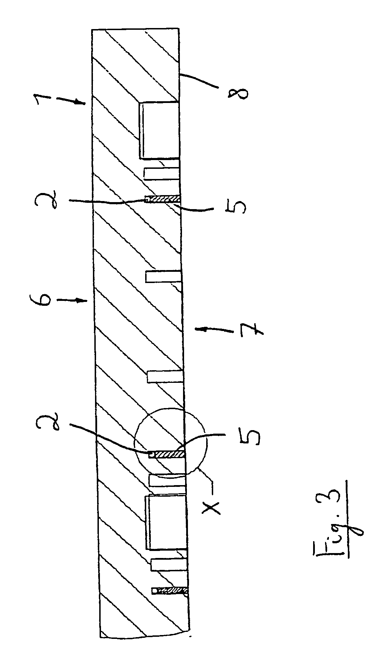

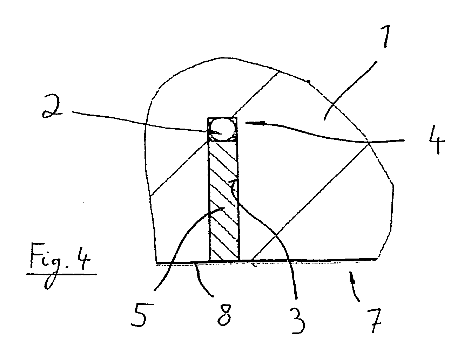

Die konkrete Anordnung des Lichtwellenleiters 2 - mit oder ohne Hüllrohr - ist aus der Schnittdarstellung gemäß Fig. 3 sowie aus der vergrößerten Darstellung gemäß Fig. 4 ersichtlich.

Hiernach ist eine Nut 3 in die abgewandte Seite 7 der Wandung 1 der Kokille eingefräst. Der Lichtwellenleiter 2 ist bis in den Nutgrund 4 eingelegt. Damit er hier verbleibt und einen guten Kontakt zum umgebenden Material der Wandung 1 hat, ist ein Füllstück 5 in die Nut 3 eingesetzt, so dass der Lichtwellenleiter 2 in Position gehalten wird.

Um den Lichtwellenleiter 2 in der Wandung 1 gegen Kühlwasser abzudichten, ist auf der abgewandten Seite 7 eine Beschichtung 8 aufgebracht. Hierbei kann es sich um eine galvanisch erzeugte Schicht, beispielsweise aus Nickel oder Kupfer, handeln.

Soll der Lichtwellenleiter 2 - wie im Ausführungsbeispiel vorgesehen - mäanderförmig verlegt werden, haben sich Schlitze 10 in der Stirnseite 9 der Wandung (s. hierzu Fig. 1) bewährt. Die Schlitze sind etwas breiter als der Durchmesser des Lichtwellenleiters 2, ggf. samt Hüllrohr, und etwas länger als der doppelte Biegeradius des Bogens des Lichtwellenleiters. Demgemäß kann beim Verlegen des Lichtwellenleiters 2 in die Nut 3 der Leiter aus einer Nut herausgeführt, um 180° umgebogen und in die Nachbamut eingeführt werden, um den mäanderförmigen Verlauf zu erzeugen. Zum dichten Abschluss des Schlitzes 10 in der Stirnseite 9 kann eine Verschlussplatte 11 vorgesehen werden.

Um die Robustheit der Signalübertragung zu erhöhen, werden die Lichtwellen über sog. Linsenstecker von der Kokille zu einer Auswerteeinheit geführt (s. unten).

Die als Bestandteil des Temperatursensors fungierende Glasfaser ist mit einem nicht dargestellten Temperaturerfassungssystem verbunden. Mittels des Erfassungssystems wird Laserlicht erzeugt, das in den Lichtwellenleiter 2 eingespeist wird. Die von der Lichtwellenleitfaser 2 gesammelten Daten werden mittels des Erfassungssystems in Temperaturen umgerechnet und den verschiedenen Messorten zugeordnet. Die Auswertung kann beispielsweise nach dem sog. Faser-Bragg-Gitter-Verfahren (FBG-Verfahren) erfolgen. Hierbei werden geeignete Lichtwellenleiter verwendet, die Messstellen mit einer periodischen Variation des Brechungsindexes bzw. Gitters mit solchen Variationen eingeprägt bekommen. Diese periodische Variation des Brechungsindexes führt dazu, dass der Lichtwellenleiter in Abhängigkeit der Periodizität für bestimmte Wellenlängen an den Messstellen einen dielektrischen Spiegel darstellt. Durch eine Temperaturänderung an einem Punkt wird die Bragg-Wellenlänge verändert, wobei genau diese reflektiert wird. Licht, das die Bragg-Bedingung nicht erfüllt, wird durch das Bragg-Gitter nicht wesentlich beeinflusst. Die verschiedenen Signale der unterschiedlichen Messstellen können dann aufgrund von Laufzeitunterschieden voneinander unterschieden werden. Der detailierte Aufbau solcher Faser-Bragg-Gitter sowie die entsprechenden Auswerteeinheiten sind allgemein bekannt. Die Genauigkeit der Ortsauflösung ist durch die Anzahl der eingeprägten Messstellen gegeben. Die Größe einer Messstelle kann beispielsweise im Bereich von 1 mm bis 5 mm liegen.

Alternativ kann zur Messung der Temperatur auch das "Optical-FrequencyDomain-Reflectometry"-Verfahren (OFDR-Verfahren) oder das "Optical-Time-Domain-Reflectometry"-Verfahren (OTDR-Verfahren) eingesetzt werden. Diese Verfahren basieren auf dem Prinzip der faseroptischen Ramanrückstreuung, wobei ausgenutzt wird, dass eine Temperaturveränderung am Punkt eines Lichtleiters eine Veränderung der Ramanrückstreuung des Lichtwellenleitermaterials verursacht. Mittels der Auswerteeinheit (z. B. einem Raman-Reflektometer) können dann die Temperaturwerte entlang einer Faser ortsaufgelöst bestimmt werden, wobei bei diesem Verfahren über eine bestimmte Länge des Leiters gemittelt wird. Diese Länge beträgt ca. einige Zentimeter. Die verschiedenen Messstellen werden wiederum durch Laufzeitunterschiede voneinander getrennt. Der Aufbau solcher Systeme zur Auswertung nach den genannten Verfahren ist allgemein bekannt, ebenso wie die nötigen Laser, die das Laserlicht innerhalb des Lichtwellenleiters 2 erzeugen.

### Bezugszeichenliste:

- 1: Wandung der Kokille / Kokillenplatte / Kühlplatte
- 2: Sensorelement / Lichtwellenleiter (ggf. samt Hüllrohr)
- 3: Nut
- 4: Nutgrund
- 5: Füllstück
- 6: Heißseite
- 7: abgewandte Seite
- 8: Beschichtung
- 9: Stirnseite
- 10: Nut / Schlitz
- 11: Verschlussplatte

## Patentansprüche

1. Kokille zur Verarbeitung von flüssigem metallischem Material, die eine Wandung (1) aufweist, in der mindestens ein Sensorelement (2) zur Erfassung der Temperatur und/oder Dehnung zumindest eines Teils der Kokille angeordnet ist, wobei das Sensorelement (2) mindestens einen Lichtwellenleiter umfasst, der in einer Nut (3) in der Wandung (1) der Kokille angeordnet ist, wobei der Lichtwellenleiter (2) im Nutgrund (4) der Nut (3) anliegt und wobei der vom Lichtwellenleiter (2) nicht ausgefüllte Raum der Nut (3) zumindest weitgehend, vorzugsweise vollständig, mit einem Füllstück (5) verschlossen ist,
**dadurch gekennzeichnet, dass**
der Lichtwellenleiter (2) bzw. ein diesen umgebendes Rohr mit dem Nutgrund (4) fest verbunden ist, wobei die Nut (3) an der von der Heißseite (6) der Wandung (1) abgewandten Seite (7) eingearbeitet ist und wobei der Lichtwellenleiter (2) in der Wandung (1) der Kokille vertikal verläuft.

2. Kokille nach Anspruch 1,
**dadurch gekennzeichnet,**
**dass** der Lichtwellenleiter (2) in einem diesen umgebenden Rohr angeordnet ist.

3. Kokille nach Anspruch 1 oder 2,
**dadurch gekennzeichnet,**
**dass** an die von der Heißseite (6) der Wandung (1) abgewandte, mit der Nut (3) versehene Seite (7) ein Kühlkanal angrenzt.

4. Kokille nach einem der Ansprüche 1 bis 3,
**dadurch gekennzeichnet,**
**dass** das Füllstück (5) aus Metall oder aus Kunststoff besteht.

5. Kokille nach einem der Ansprüche 1 bis 4,
**dadurch gekennzeichnet,**
**dass** das Füllstück (5) passgenau zur Form der Nut (3) ausgebildet ist.

6. Kokille nach einem der Ansprüche 1 bis 5,
**dadurch gekennzeichnet,**
**dass** das Füllstück (5) durch ein Vergießen oder Spritzen des Materials des Füllstücks in die Nut (3) erzeugt ist.

7. Kokille nach einem der Ansprüche 1 bis 6,
**dadurch gekennzeichnet,**
**dass** die von der Heißseite (6) der Wandung (1) abgewandte, mit der Nut (3) versehene Seite (7) samt dem in der Nut (3) angeordneten Füllstück (5) mit einer Beschichtung (8) versehen ist, wobei die Beschichtung (8) vorzugsweise aus metallischem oder organischem Material besteht.

8. Kokille nach Anspruch 7,
**dadurch gekennzeichnet,**
**dass** die Beschichtung (8) eben und durchgängig die Wandung (1) und das Füllstück (5) bedeckt.

9. Kokille nach Anspruch 7 oder 8,
**dadurch gekennzeichnet,**
**dass** die metallische Beschichtung (8) galvanisch auf die Wandung (1) aufgebracht ist.

10. Kokille nach einem der Ansprüche 1 bis 9,
**dadurch gekennzeichnet,**
**dass** an zumindest einer Stirnseite (9) der Wandung (1) der Kokille eine Nut oder ein Schlitz (10) eingearbeitet ist, deren bzw. dessen Breite mindestens dem Durchmesser des Lichtwellenleiters (2) entspricht.

## Claims

1. Mould for processing liquid metallic material, comprising a wall (1) in which at least one sensor element (2) for detecting the temperature and/or expansion of at least a part of the mould is arranged, wherein the sensor element (2) comprises at least one optical waveguide arranged in a groove (3) in the wall (1) of the mould, wherein the optical waveguide (2) bears in the groove base (4) of the groove (3) and wherein the volume of the groove (3) not filled by the optical waveguide (2) is at least substantially, preferably completely, closed by a filler member (5), **characterised in that** the optical waveguide (2) or a tube surrounding this is fixedly connected with the groove base (4), wherein the groove (3) is formed at the side (7) remote from the hot side (6) of the wall (1) and wherein the optical waveguide (2) extends vertically in the wall (1) of the mould.

2. Mould according to claim 1, **characterised in that** the optical waveguide (2) is arranged in a tube surrounding this.

3. Mould according to claim 1 or 2, **characterised in that** a cooling channel adjoins the side (7) which is remote from the hot side (6) of the wall (1) and which is provided with the groove (3).

4. Mould according to any one of claims 1 to 3, **characterised in that** the filler member (5) consists of metal or of plastics material.

5. Mould according to any one of claims 1 to 4, **characterised in that** the filler member (5) is constructed with accurate registration to the shape of the groove (3).

6. Mould according to any one of claims 1 to 5, **characterised in that** the filler member (5) is produced by casting or injection-moulding the material of the filler member in the groove (3).

7. Mould according to any one of claims 1 to 6, **characterised in that** the side (7), which is remote from the hot side (6) of the wall (1) and which is provided with the groove (3), inclusive of the filler member (5) arranged in the groove (3) is provided with a coating (8), wherein the coating (8) preferably consists of metallic or organic material.

8. Mould according to claim 7, **characterised in that** the coating (8) flatly and continuously covers the wall (1) and the filler member (5).

9. Mould according to claim 7 or 8, **characterised in that** the metal coating (8) is applied to the wall (1) by electroplating.

10. Mould according to any one of claims 1 to 9, **characterised in that** a groove or slot (10) having a width corresponding with at least the diameter of the optical waveguide (2) is formed at at least one end face (9) of the wall (1) of the mould.

## Revendications

1. Lingotière pour le traitement d'une matière métallique liquide, qui présente une paroi (1) dans laquelle est disposé au moins un élément de détection (2) pour l'enregistrement de la température et/ou de l'allongement d'au moins une partie de la lingotière, l'élément de détection (2) comprenant au moins une fibre optique qui est disposée dans une rainure (3) dans la paroi (1) de la lingotière, la fibre optique (2) étant disposée en position adjacente à la base (4) de la rainure (3) et l'espace de la rainure (3) qui n'est pas rempli par la fibre optique (2) étant renfermé au moins dans une large mesure, de préférence complètement avec un élément de remplissage (5),
**caractérisée en ce que**
la fibre optique (2), respectivement un tube entourant cette dernière, est reliée à demeure à la base de la rainure (4), la rainure (3) est incorporée du côté (7) qui se détourne du côté chaud (6) de la paroi (1) et la fibre optique (2) s'étend à la verticale dans la paroi (1) de la lingotière.

2. Lingotière selon la revendication 1,
**caractérisée**
**en ce que** la fibre optique (2) est disposée dans un tube qui l'entoure.

3. Lingotière selon la revendication 1 ou 2,
**caractérisée**
**en ce qu'**un canal de refroidissement jouxte le côté (7) muni de la rainure (3), qui se détourne du côté chaud (6) de la paroi (1).

4. Lingotière selon l'une quelconque des revendications 1 à 3,
**caractérisée**
**en ce que** l'élément de remplissage (5) est constitué de métal ou d'une matière synthétique.

5. Lingotière selon l'une quelconque des revendications 1 à 4,
**caractérisée**
**en ce que** l'élément de remplissage (5) est réalisé pour épouser en ajustage serré la forme de la rainure (3).

6. Lingotière selon l'une quelconque des revendications 1 à 5,
**caractérisée**
**en ce qu'**on obtient l'élément de remplissage (5) en versant ou en pulvérisant la matière de l'élément de remplissage dans la rainure (3).

7. Lingotière selon l'une quelconque des revendications 1 à 6,
**caractérisée**
**en ce que** le côté (7) muni de la rainure (3), qui se détourne du côté chaud (6) de la paroi (1) est muni d'une enduction (8) avec l'élément de remplissage (5) disposé dans la rainure (3), l'enduction (8) étant de préférence constituée d'une matière métallique ou organique.

8. Lingotière selon la revendication 7,
**caractérisée**
**en ce que** l'enduction (8) recouvre de manière plane et en continu la paroi (1) et l'élément de remplissage (5).

9. Lingotière selon la revendication 7 ou 8,
**caractérisée**
**en ce que** l'enduction métallique (8) est appliquée par voie galvanique sur la paroi (1).

10. Lingotière selon l'une quelconque des revendications 1 à 9,
**caractérisée**
**en ce qu'**on incorpore, contre au moins un côté frontal (9) de la paroi (1) de la lingotière, une rainure ou une fente (10) dont la largeur correspond au moins au diamètre de la fibre optique (2).
